# EUROPÄISCHE PATENTSCHRIFT

(11) **EP 2 306 054 B1**
(45) Veröffentlichungstag und Bekanntmachung des Hinweises auf die Patenterteilung: **10.07.2013**
(21) Anmeldenummer: 09012457.9
(22) Anmeldetag: 01.10.2009
(51) Int. Cl.: F16K 3/08, F16K 31/53

(54) **Drehschieberventil**
Turning head valve
Soupape à tiroir rotatif

(43) Veröffentlichungstag der Anmeldung: 06.04.2011
(73) Patentinhaber: Wolfgang Barth GmbH & Co. KG, 88521 Binzwangen (DE)
(72) Erfinder: Barth, Wolfgang, 88521 Binzwangen (DE)
(74) Vertreter: Späth, Dieter

(56) Entgegenhaltungen:
- EP-A1- 0 392 383
- DE-C1- 4 220 070
- US-A- 4 432 387
- US-A- 5 308 040

## Beschreibung

Die Erfindung betrifft ein Drehschieberventil mit den Merkmalen des Oberbegriffs des Anspruchs 1. Das Drehschieberventil ist insbesondere als Bypassventil für einen Abgasturbolader einer Brennkraftmaschine vorgesehen.

Die Offenlegungsschrift DE 102 07 922 A1 offenbart ein Drehschieberventil mit einem Flachdrehschieber als Absperrkörper, der drehbar in einem zylinderförmigen Gehäuse gelagert ist, dessen axiale Länge ein Mehrfaches des Durchmessers beträgt. Koaxial ist ein Elektromotor mit angeflanschtem Getriebe zum Dreh- bzw. Schwenkantrieb des Flachdrehschiebers um seine Achse angeordnet. Der Flachdrehschieber hat die Form einer Kreisscheibe mit näherungsweise dreiecksförmigen Aussparungen. Axial gesehen sieht der Flachdrehschieber einer Schiffsschraube ähnlich, wobei "Flügel" des Flachdrehschiebers keine Verschränkung aufweisen, sondern in der Ebene des Flachdrehschiebers sind. Der Flachdrehschieber liegt an einem Ventilsitz an, der als nahezu deckungsgleiche Kreisscheibe mit Aussparungen ausgebildet ist, die hier als Ventildurchlässe bezeichnet werden. Der Flachdrehschieber lässt sich in eine Schließstellung drehen, in der er die Ventildurchlässe sperrt, und er lässt sich in eine Offenstellung drehen, in der seine Aussparungen deckungsgleich mit den Ventildurchlässen sind, so dass der Flachdrehschieber die Ventildurchlässe freigibt und das Drehschieberventil offen ist. Zwischenstellungen sind möglich. Die Drehung des Flachdrehschiebers kann auch als Schwenken um seine Achse bezeichnet werden, weil an sich keine Drehung stets in derselben Richtung sondern eine Drehung zum Öffnen in entgegengesetzter Richtung wie zum Schließen vorgesehen ist, wenngleich eine Drehung stets in derselben Richtung nicht grundsätzlich ausgeschlossen ist.

Die Offenlegungsschrift DE 36 06 944 A1 offenbart ein Drehschieberventil als Bypassventil eines Abgasturboladers, dessen Drehschieber rohrförmig ist und eine Aussparung in seiner Umfangswand aufweist. Der Drehschieber ist koaxial zu einem Turbinenrad in einem radialen Turbinenauslass angeordnet. Ein Dreh- bzw. Schwenkantrieb des Drehschiebers erfolgt mittels einer Zahnstange, die mit einer kreisförmigen Verzahnung am Umfang des Drehschiebers kämmt.

Die Patentschrift DE 42 20 070 C1 offenbart ein Drehschieberventil für flüssige oder gasförmige Medien mit einem Flachdrehschieber, der eine Verzahnung an seinem Umfang nach Art eines Stirnzahnrads aufweist. Mit der Verzahnung des Flachdrehschiebers kämmt eine Zahnstange zum Drehen des Flachdrehschiebers und damit zum Öffnen und Schließen des Drehschieberventils.

Ein vergleichbares Drehschieberventil offenbart die Europäische Patentanmeldung EP 0 392 383 A1.

Aufgabe der Erfindung ist ein flachbauendes, preisgünstiges und einfach herstellbares Drehschieberventil vorzuschlagen, das insbesondere als Bypassventil für einen Abgasturbolader geeignet ist.

Diese Aufgabe wird erfindungsgemäß durch die Merkmale des Anspruchs 1 gelöst. Das erfindungsgemäße Drehschieberventil weist einen Flachdrehschieber mit einer kreisbogenförmigen Verzahnung an seinem Umfang auf, die zum Dreh - oder Schwenkantrieb des Drehschiebers mit einer Zahnstange kämmt. Die Flachdrehschieberbauart ermöglicht ein bauraumsparendes, flaches Drehschieberventil. Der Flachdrehschieber und ein Ventilsitz können aus plattenförmigem, ebenem Material hergestellt werden, was als günstiger als die Herstellung aus rohrförmigem Material anzusehen ist. Auch die Bearbeitung plattenförmigen Materials ist als günstiger als die Bearbeitung von Rohrmaterial anzusehen. Für den Flachdrehschieber und den Ventilsitz sind, jedenfalls wenn sie auf der Turbinenseite eines Abgasturboladers angeordnet sind, wegen der thermischen und mechanischen Belastung extrem teure Materialen erforderlich, die Werkzeuge bei der Bearbeitung stark verschleißen. Deswegen ist die Herstellbarkeit aus plattenförmigem Material als erheblicher Vorteil anzusehen. Ein weiterer Vorteil der Plattenform ist eine konstruktiv und für die Strömungsführung günstige, bauraumsparende Einbaumöglichkeit in einen Abgasturbolader.

Grundsätzlich genügt ein Ventildurchlass. Für eine größere Durchlassfläche bzw. einen kleineren Schwenkwinkel zum Öffnen und Schließen sind mehrere, beispielsweise drei Ventildurchlässe vorteilhaft. Mit kreisbogenförmig ist eine Verzahnung wie bei einem Stirnrad gemeint, wobei sich die Verzahnung nicht über den vollen Umfang erstrecken muss, sondern eine Verzahnung auf einem Teilumfang genügt, der so groß ist, dass er zum Öffnen und Schließen des Drehschieberventils genügt.

Das erfindungsgemäße Drehschieberventil weist mindestens einen weiteren Drehschieber auf, der ebenfalls eine kreisbogenförmige Verzahnung an seinem Umfang aufweist, die mit der Verzahnung des einen Drehschiebers kämmt. Auf diese Weise lassen sich zwei oder auch mehr Drehschieber mit einer Zahnstange antreiben, die mit der Verzahnung eines Drehschiebers kämmt. Die Drehschieber können als parallel geschaltete Absperrkörper eines Ventils vorgesehen sein. Ebenso können die Drehschieber gemeinsam angetriebene Absperrkörper mehrerer Drehschieberventile bilden, die ein gemeinsames Gehäuse oder eigene Gehäuse aufweisen können. Das Drehschieberventil kann in einen Abgasturbolader integriert sein, wobei ein Gehäuse des Abgasturboladers zugleich auch ein Gehäuse des Drehschieberventils bildet. Der Ventilsitz mit dem Ventildurchlass oder den Ventildurchlässen kann am bzw. im Gehäuse des Abgasturboladers ausgebildet sein. Der Drehantrieb eines Drehschiebers mit einer Zahnstange und mindestens eines weiteren Drehschiebers über kämmende Verzahnungen an den Umfängen der Drehschieber ist nicht auf Flachdrehschieber beschränkt, sondern kann bei Ausgestaltungen der Erfindung auch mit Drehschiebern anderer Bauart verwirklicht sein.

Eine Ausgestaltung der Erfindung sieht vor, dass mehrere Drehschieber synchron Öffnen und Schließen. Eine andere erfindungsgemäße Möglichkeit ist, dass die Drehschieber unterschiedlich weit geöffnet sind, d.h. zumindest teilweise nacheinander öffnen, also ihre Ventildurchlässe nacheinander oder zumindest versetzt zueinander freigeben. Diese Ausgestaltung der Erfindung verbessert eine Steuerung der Ventilöffnung, womit gemeint ist, eine Steuerung der Gesamtgröße der freien Ventildurchlassflächen. Auch ist erfindungsgemäß möglich, einen Drehschieber zu öffnen und zugleich einen anderen Drehschieber zu schließen.

Eine Ausgestaltung der Erfindung sieht unterschiedlich große Ventildurchlässe mehrerer Drehschieber vor. Auch diese Ausgestaltung der Erfindung verbessert eine Steuerbarkeit eines Ventildurchsatz, indem ein kleiner Ventildurchsatz mit einem kleinen Ventildurchlass und ein großer Ventildurchsatz mit einem großen Ventildurchlass oder auch mit einem kleinen Ventildurchlass zusätzlich zu einem großen Ventildurchlass, gesteuert wird. Mit Ventildurchsatz ist ein Fluidstrom durch das oder die Drehschieberventile gemeint.

Vorzugsweise ist der Flachdrehschieber auf einer Ventileinlassseite des Ventilsitz angeordnet, wobei der Ventilsitz das insbesondere plattenförmige Teil mit dem Ventildurchlass ist. Ein Fluidstrom durch das Drehschieberventil drückt den Flachdrehschieber dadurch gegen den Ventilsitz, so dass ein Klappern vermieden wird. Das mindert Verschleiß und verringert die Gefahr eines Bruchs des Flachdrehschiebers durch pulsierende Stoßbelastung. Bei der Verwendung des Drehschieberventils als Bypassventil eines Abgasturboladers ist die mechanische Belastung durch hochfrequente, stoßartige Impulse aufgrund der Abgasdurchströmung so hoch, dass auch hochfestes Material bruchgefährdet ist.

In bevorzugter Ausgestaltung ist das Drehschiebenventil insgesamt plattenförmig und damit flachbauend.

Gemäß Anspruch 8 ist das erläuterte Drehschieberventil als Bypassventil in einer Bypassleitung eines Abgasturboladers für eine Brennkraftmaschine angeordnet. Vorzugsweise bildet ein Gehäuse des Abgasturboladers zugleich auch ein Gehäuse des Drehschieberventils.

Die Erfindung wird nachfolgend anhand eines in der Zeichnung dargestellten Ausführungsbeispiels näher erläutert. Es zeigen:
- Figur 1: eine Ansicht eines Drehschieberventils gemäß der Erfindung gemäß Pfeil I in Figur 2; und
- Figur 2: einen Abgasturbolader mit dem Drehschieberventil aus Figur 1 gemäß der Erfindung.

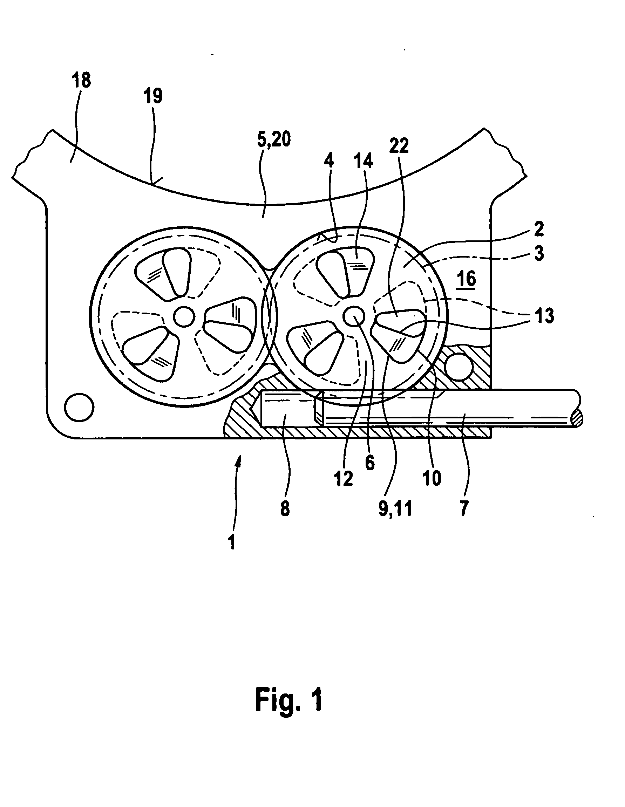

Das in Figur 1 dargestellte Drehschieberventil 1 weist zwei kreisförmige Flachdrehschieber 2 auf, die einen Verzahnung 3 nach Art von Stirnrädern an ihrem Umfang aufweisen. Die Verzahnungen 3 können als kreisbogenförmig bezeichnet werden. Die Verzahnungen 3 der beiden Flachdrehschieber 2 kämen miteinander, so dass eine Drehung vom einen auf den anderen Flachdrehschieber 3 übertragen wird.

Die Flachdrehschieber 2 liegen in kreisförmigen Ansenkungen 4 eines Gehäuses 5 des Drehschieberventils 1 ein und sind auf Lagerzapfen 6 in der Mitte der Ansenkungen 4 drehbar gelagert. In dem Umfangsbereich, in dem die Verzahnungen 3 der Flachdrehschieber 2 kämmen, gehen die Ansenkungen 4 ineinander über. Die Ansenkungen 4 sind geringfügig tiefer als die Flachdrehschieber 2 dick sind, damit die Flachdrehschieber 2 nicht im Gehäuse 5 festgeklemmt werden, sondern drehbar sind.

Die Verzahnung 3 eines der Flachdrehschieber 2 kämmt mit einer Zahnstange 7, die in einer Bohrung 8 im Gehäuse 5 tangential zu dem einen Flachdrehschieber 2 verschiebbar ist. Die Zahnstange 7 dient dem Öffnen und Schließen des Drehschieberventils 1, durch Verschieben der Zahnstange 7 wird der mit ihr kämmende Flachdrehschieber 2 gedreht und treibt den anderen Flachdrehschieber 2 über die kämmenden Verzahnungen 3 ebenfalls zu einer Drehung an. Die Drehung der Flachdrehschieber 2 kann auch als Schwenken um ihre Achsen bzw. um die Lagerzapfen 6 aufgefasst werden, weil eine Drehung der Flachdrehschieber nur um einen begrenzten Dreh- bzw. Schwenkwinkel erfolgt.

Die Flachdrehschieber 2 weisen Aussparungen 9 für einen Fluiddurchlass durch das Drehschieberventil 1 auf. Im dargestellten und beschriebenen Ausführungsbeispiel weist jeder Flachdrehschieber 2 drei Aussparungen 9 auf, die um 120° zueinander versetzt über den Umfang verteilt angeordnet sind. Die Aussparungen 9 sind dreiecksförmig mit gerundeten Ecken, einem kreisbogenförmigen Außenrand 10 in Umfangsrichtung und zwei radialen Rändern 11. In Umfangsrichtung erstrecken sich die Aussparungen 9 um weniger als 60°, so dass zwischen den Aussparungen 9 eine sich in Umfangsrichtung der Flachdrehschieber 2 weiter als die Aussparungen 9 erstreckende Fläche 12 bestehen bleibt. Anzahl, Anordnung und Form der Aussparungen 9 ist nicht zwingend für die Erfindung. Die Flachdrehschieber 2 können als Absperrkörper des Drehschieberventils 1 aufgefasst werden.

Die Aussparungen 9 der Flachdrehschieber 2 wirken zusammen kongruenten Ventildurchlässen 13 am Grund der Ansenkungen 4, die in Figur 1 mit Strichlinien dargestellt sind, soweit sie von den Flachdrehschiebem 2 verdeckt sind. Das Drehschieberventil 1 wird geöffnet, indem die Flachdrehschieber 2 mit der Zahnstange 7 und mittels ihrer kämmenden Verzahnungen 3 so gedreht werden, dass ihre Aussparungen 9 in Deckung mit den Ventildurchlässen 13 kommen. Das ist die Offenstellung. Das Schließen des Drehschieberventils 1 erfolgt durch Drehung der Flachdrehschieber 2 in umgekehrter Richtung so, dass die Aussparungen 9 der Flachdrehschieber 2 außer Deckung von den Ventildurchlässen 13 sind; die Ventildurchlässe 13 sind in dieser Drehstellung der Flachdrehschieber 2, der Schließstellung, von den Flächen 12 der Flachdrehschieber 2 zwischen den Aussparungen 9 abgedeckt. Zwischenstellungen sind möglich, Figur 1 zeigt das Drehschieberventil 1 in teilweise geöffneter Stellung, in der die Aussparungen 9 der Flachdrehschieber 2 die Ventildurchlässe 13 teilweise überdecken. Die übrige Fläche der Ventildurchlässe 13 ist von den Flächen 12 der Flachdrehschieber 2 zwischen den Aussparungen 9 abgedeckt. Der Grund der Ansenkungen 4 mit den Ventildurchlässen 13 kann auch als Ventilsitz 14 aufgefasst werden.

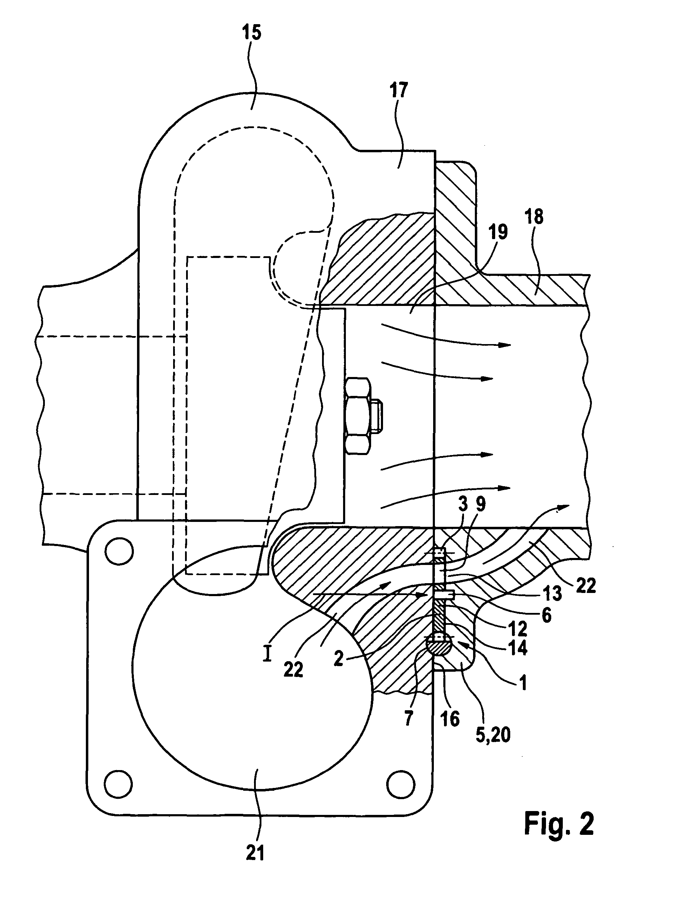

Das Drehschieberventil 1 ist als Bypassventil einer Abgasturbine 15 eines im übrigen nicht dargestellten Abgasturboladers für einen Verbrennungsmotor eines Kraftwagens vorgesehen. In Figur 2 ist das Drehschieberventil 1 an einer Trennebene 16 zwischen einem Gehäuse 17 der Abgasturbine 15 bzw. des Turboladers und einem Abgasrohr 18, das an einem Auslass 19 der Abgasturbine 15 befestigt ist, angeordnet. Das Drehschieberventil 1 ist im Bereich eines Flanschs 20 des Abgasrohrs 18 untergebracht, in dem die Ansenkung 4 angebracht ist, in der die Flachdrehschieber 2 drehbar einliegen. Das Abgasrohr 18, sein Flansch 20 bzw. das Gehäuse 17 des Abgasturboladers können als Gehäuse 5 des Drehschieberventils 1 aufgefasst werden. Ein Abgaseinlass 21 vom nicht dargestellten Verbrennungsmotor mündet radial in das Gehäuse 17 der Abgasturbine 15, der Abgasauslass 19 führt axial aus dem Gehäuse 17 der Abgasturbine 15 in das Abgasrohr 18. Vom Abgaseinlass 21 gehen ein oder mehrere Bypassleitungen 22 an der Abgasturbine 15 vorbei in das Abgasrohr 18, wo sie in den Abgasauslass 19 münden. Die Bypassleitungen 22 bilden die Ventildurchlässe 13 des Drehschieberventils 1, und zwar bilden Mündungen der Bypassleitungen 22 am Grund der Ansenkungen 4, in denen die Flachdrehschieber 2 drehbar einliegen, die Ventildurchlässe 13. Der Grund der Ansenkungen 4 kann wie bereits gesagt als Ventilsitz 14 aufgefasst werden. Es kann eine Bypassleitung 22 vom Abgasauslass 21 ausgehend sich zu den Ventildurchlässen 13 verzweigen und nach den Ventildurchlässen 13 sich wieder zu einer gemeinsamen Bypassleitung 22 vereinigen und/oder es können mehrere Bypassleitungen 22 für die Ventildurchlässe 13 vorgesehen sein. Die Bypassleitung 22 lässt sich durch Öffnen und Schließen des Drehschieberventils 1 Öffnen und Schließen, ein teilweises Öffnen ist möglich. Das Öffnen und Schließen des Drehschieberventils 1 ist zu Figur 1 beschrieben worden. In Figur 2 verläuft die Zahnstange 7 zum Drehen der Flachdrehschieber 2 senkrecht zur Zeichenebene und ist im Querschnitt zu sehen. In Figur 2 ist einer der beiden Flachdrehschieber 2 zu sehen, der andere Flachdrehschieber 2 befindet sich außerhalb der Schnitt- und Zeichenebene. Vom Flachdrehschieber 2 ist eine Aussparung 9 zu sehen, die anderen Aussparungen 9 befinden sich ebenfalls außerhalb der Zeichenebene.

Die Flachdrehschieber 2 sind auf einer Ventileinlassseite des Ventilsitz 14 vorgesehen, so dass sie vom Abgasdruck gegen den Ventilsitz 14 beaufschlagt werden. Dadurch wird ein Klappern vermieden und es wird eine mechanische Beanspruchung der Flachdrehschieber 2 durch hochfrequente, impulsartige Stöße verringert, die eine Abgasströmung durch die Bypassleitung 22 verursachen kann. Eine mechanische Beanspruchung der Flachdrehschieber 2 und die Gefahr ihres Bruchs durch Überbeanspruchung werden verringert.

Durch die plattenförmige, flachbauende Ausbildung mit Flachdrehschiebern 2 lässt sich das Drehschieberventil 1 platzsparend wie dargestellt beispielsweise an der Trennebene 16 zwischen dem Gehäuse 17 des Abgasturboladers und dem Abgasrohr 18 anordnen. Grundsätzlich ist das Drehschieberventil 1 auch mit einem Flachdrehschieber 2 möglich. Die Aufteilung in zwei Flachdrehschieber 2 ermöglicht eine platzsparende Anordnung im Umfangsbereich des Abgasrohrs 18, bei gleicher Gesamtfläche der Ventildurchlässe 13 steht das Drehschieberventil 1 mit zwei Flachdrehschiebem 2 radial weniger weit ab als es bei einem Drehschieberventil mit einem Flachdrehschieber 2 der Fall wäre. Möglich sind auch mehr als die beiden Flachdrehschieber 2, die sich beispielsweise entlang des Umfangs des Abgasrohrs 18 anordnen lassen, wobei ein Flachdrehschieber 2 mit seiner Verzahnung 3 einen weiteren Flachdrehschieber 2 antreibt (nicht dargestellt). Der Antrieb mit einer Zahnstange 7 wird wegen der Anordnung in der Ebene der Flachdrehschieber 2 als vorteilhaft angesehen. Grundsätzlich ist allerdings auch ein anderer Drehantrieb beispielsweise über eine Welle, auf der einer der Flachdrehschieber drehfest angeordnet ist, denkbar (nicht dargestellt). Grundsätzlich ist auch ein eigenes Gehäuse des Drehschieberventils 1 möglich, insbesondere für andere Anwendungen als für einen Abgasturbolader. Auch ein Winkelversatz der Flachdrehschieber 2 zueinander ist möglich, so dass sie versetzt zueinander öffnen und schließen. Das kann insbesondere die Steuer- oder Regelbarkeit eines Fluidstroms durch das Drehschieberventil 1 verbessern. Auch ist es möglich, dass ein Flachdrehschieber 2 öffnet wenn der andere Flachdrehschieber 2 schließt. Diese Anwendung ist zwar für ein Bypassventil sinnlos, kann aber für andere Anwendungen sinnvoll sein, für die zwei gegenläufig öffnende und schließende Ventile erforderlich sind.

## Patentansprüche

1. Drehschieberventil, dessen Absperrkörper ein Drehschieber (2) ist, der in eine Schließstellung, in der er einen Ventildurchlass (13) sperrt, und in eine Offenstellung, in der er den Ventildurchlass (13) freigibt, drehbar ist, und mit einer kreisbogenförmigen Verzahnung (3) an einem Umfang des Drehschiebers (2), die mit einer Zahnstange (7) zum Drehantrieb des Drehschiebers (2) kämmt, wobei der Drehschieber (2) ein Flachdrehschieber (2) ist, **dadurch gekennzeichnet, dass** die Verzahnung (3) des Drehschiebers (2) mit einer kreisbogenförmigen Verzahnung (3) mindestens eines weiteren Drehschiebers (2) zu dessen Drehantrieb kämmt.

2. Drehschieberventil nach Anspruch 1, **dadurch gekennzeichnet, dass** die Drehschieber (2) synchron öffnen und schließen.

3. Drehschieberventil nach Anspruch 1, **dadurch gekennzeichnet, dass** die Drehschieber (2) unterschiedlich weit geöffnet sind.

4. Drehschieberventil nach Anspruch 1, **dadurch gekennzeichnet, dass** ein Drehschieber (2) öffnet während der andere Drehschieber (2) schließt.

5. Drehschieberventil nach Anspruch 1, **dadurch gekennzeichnet, dass** die Drehschieber (2) unterschiedlich große Ventildurchlässe (13) aufweisen.

6. Drehschieberventil nach einem der vorhergehenden Ansprüche, **dadurch gekennzeichnet, dass** der Flachdrehschieber (2) auf einer Ventileinlassseite eines Ventilsitz (14) angeordnet ist.

7. Drehschieberventil nach einem der vorhergehenden Ansprüche, **dadurch gekennzeichnet, dass** das Drehschieberventil (1) plattenförmig ist.

8. Drehschieberventil nach einem der vorhergehenden Ansprüche, **dadurch gekennzeichnet, dass** das Drehschieberventil (1) in einer Bypassleitung (22) eines Abgasturboladers für eine Brennkraftmaschine zwischen einem Gaseinlass (21) und einem Gasauslass (19) des Abgasturboladers angeordnet ist.

## Claims

1. Turning head valve, which has a locking body formed as a rotary slider (2) that can be rotated to a closed position in which it blocks a valve passage (13) and to an opened position in which the valve passage is unblocked (13), and a circular arc shaped tooth system (3) formed at a periphery of the rotary slider (2), whereby the tooth system meshes with a gear rod (7) for rotating the rotary slider (2), wherein the rotary slider (2) is formed as a flat rotary slider (2), **characterised in that** the tooth system (3) of the rotary slider (2) meshes with a circular arc shaped tooth system (3) of at least one further rotary slider (2) for its rotation.

2. Turning head valve according to claim 1, **characterised in that** the rotary sliders (2) open and close synchronously.

3. Turning head valve according to claim 1, **characterised in that** the rotary sliders (2) have different opening widths.

4. Turning head valve according to claim 1, **characterised in that** a rotary slider (2) opens while the other rotary slider (2) closes.

5. Turning head valve according to claim 1, **characterised in that** the rotary sliders (2) have valves passages (13) of different sizes.

6. Turning head valve according to any one of the preceding claims, **characterised in that** the flat rotary slider (2) is arranged at a valve inlet side of a valve seat (14).

7. Turning head valve according to any one of the preceding claims, **characterised in that** the turning head valve (1) is plate-shaped.

8. Turning head valve according to any one of the preceding claims, **characterised in that** the turning head valve (1) is arranged in a bypass line (22) of an exhaust gas turbocharger for an internal combustion engine between a gas inlet (21) and a gas outlet (19) of the exhaust gas turbocharger.

## Revendications

1. Vanne à tiroir rotatif dont le corps obturateur est un tiroir rotatif (2) pouvant être amené, par rotation, à une position de fermeture dans laquelle il occulte un passage de distribution (13), et à une position d'ouverture dans laquelle il libère ledit passage de distribution (13), comprenant une denture (3) en arc de cercle située sur un pourtour du tiroir rotatif (2) et engrenant dans une crémaillère (7), en vue de l'entraînement en rotation dudit tiroir rotatif (2), ledit tiroir rotatif (2) étant un tiroir rotatif aplati (2), **caractérisée par le fait que** la denture (3) du tiroir rotatif (2) engrène dans une denture (3) en arc de cercle d'au moins un autre tiroir rotatif (2), en vue d'entraîner ce dernier en rotation.

2. Vanne à tiroir rotatif selon la revendication 1, **caractérisée par le fait que** les tiroirs rotatifs (2) s'ouvrent et se ferment en synchronisme.

3. Vanne à tiroir rotatif selon la revendication 1, **caractérisée par le fait que** les tiroirs rotatifs (2) sont ouverts suivant des ampleurs différentes.

4. Vanne à tiroir rotatif selon la revendication 1, **caractérisée par le fait qu'**un tiroir rotatif (2) s'ouvre alors que l'autre tiroir rotatif (2) se ferme.

5. Vanne à tiroir rotatif selon la revendication 1, **caractérisée par le fait que** les tiroirs rotatifs (2) présentent des passages de distribution (13) différemment grands.

6. Vanne à tiroir rotatif selon l'une des revendications précédentes, **caractérisée par le fait que** le tiroir rotatif aplati (2) se trouve d'un côté d'un siège d'obturation (14) qui pointe vers l'admission de ladite vanne.

7. Vanne à tiroir rotatif selon l'une des revendications précédentes, **caractérisée par le fait que** ladite vanne (1) à tiroir rotatif est configurée en une platine.

8. Vanne à tiroir rotatif selon l'une des revendications précédentes, **caractérisée par le fait que** ladite vanne (1) à tiroir rotatif est disposée dans un conduit de dérivation (22) d'un turbocompresseur à gaz d'échappement destiné à un moteur à combustion interne, entre une admission (21) des gaz et une sortie (19) des gaz dudit turbocompresseur à gaz d'échappement.
